# EUROPEAN PATENT APPLICATION

(11) **EP 2 369 217 A2**
(43) Date of publication of application: **28.09.2011**
(21) Application number: 10193416.4
(22) Date of filing: 02.12.2010
(51) Int. Cl.: F16L 53/00

(54) **Anti-freeze tube used for transporting liquid**

(30) Priority: 16.03.2010 CN 201010125167
(71) Applicant: Chinaust Plastics Corp. Ltd., Zhou Zhou City Hebei 072761 (CN)
(72) Inventor: Wei, Liu, Zhouzhou City, Hebei (CN); Zhiqiang, Yang, Zhouzhou City, Hebei (CN); Jingming, Gong, Zhouzhou City, Hebei (CN)
(74) Representative: De Colle, Piergiacomo

(57) **Abstract**

The invention relates to an antifreezing tube for the transportation of liquids, including in the most inside a corrosion-resistant layer (1), in the most outside a insulating protective layer (3) and a heating layer (2) between the corrosion resistant layer (1) and the insulation layer (3). According to the invention, a positive lead wire (4) and a negative lead wire (5) are arranged between the electric heating layer (2) and the insulation layer (3) or within the electric heating layer (2). The positive lead wire (4) and the negative lead wire (5) extend along the length of the antifreezing tube. Electrical current which flows through the positive lead wire (4), the electric heating layer (2) and the negative lead wire (5) effects - due to the electrical resistance of the electric heating layer (2) - a heating of the antifreezing tube.

## Description

The present invention discloses a antifreeze tube used for the transmission of liquids, including a most inner side made as corrosion resistant layer, a most outer side made as insulation layer and a heating layer between the corrosion resistant layer and the insulation layer.

There are positive and negative lead wires between the electric heating layer and insulation layer. Positive and negative lead wires are arranged across the tube diameter away from the opposite position of each other, and extending along the length of the tube.

The positive lead wire and the negative lead wire are both in close contact with the electrical conductive heating layer, thereby the electric heating layer forms a return circuit between the positive lead wire and negative lead wire, in order to form resistance between the positive wire and negative wire and causing electrical heating in the anti-freeze tube to prevent the liquid from freezing.

### Technological field

This application relates to an antifreeze pipe for conveying liquids, the antifreeze pipe contains a heating device, which is suitable especially for diesel vehicles in the transport of urea solution.

### Background

To make the emission performance of diesel vehicles to meet increasingly stringent regulatory requirements, diesel vehicles need to install SCR system. SCR systems require the use of an urea solution.

Urea solutions cause corrosion and freeze easily when temperatures fall very low, clausing transmission tube to block and resulting in SCR system failure.

Therefore there is a need for an improved tube for the transportation of urea solution particularly at low temperatures.

### Invention

The inventive transportation tube is designed according to the claims. The inventive transportation tube is an antifreeze tube suitable for the transportation of liquids. The antifreeze tube includes on the most inside a corrosion-resistant layer, on the most outside an insulating protective layer, and in between a - electrical conductive - heating layer. There are positive and negative lead wires between the electric heating layer and the insulation layer, or within the heating layer or between the corrosion resistance layer and heating layer. Positive and negative lead wires are arranged along the tube in diametrically opposite positions to each other and extending along the length of the tube. The positive lead wire and the negative lead wire both lie in close contact with the electrical heating layer, thereby making the electric heating layer to form a closed circuit between the positive lead wire and negative lead wire, in order to create a resistance between the positive wire and the negative wire and herewith to heat the anti-freeze tube to prevent the liquid from freezing.

Optimally the heating layer is formed by the continuous electric conductive heating material layer, resulting in surface heating.

Optimally, said electric heating layer is formed by the resistance wires which are spirally or straight line wound around the corrosion resistance layer to heat the tube by line heating.

The invention is in the following explained by the use of schematic drawings. The figures show:
Figure 1 shows a cross-section of an inventive anti-freezing pipes;
Figure 2 shows a longitudinal cross-section;
Figure 3 shows a side view

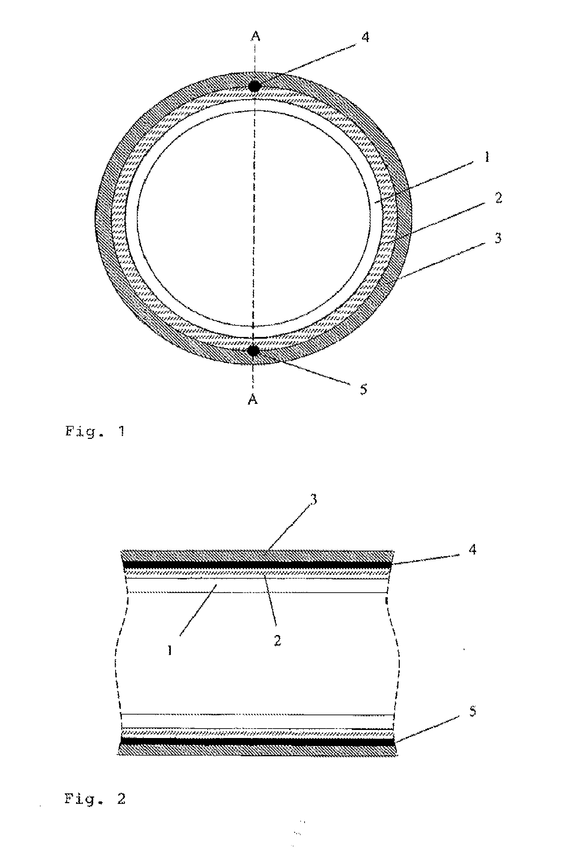

Figure 1 and Figure 2 illustrate a possible implementation of the inventive anti-freezing pipe.

As shown in Figure 1 and Figure 2, the anti-freezing tube includes a most inside corrosion-resistant layer 1 and a most outside insulation layer 3, in between including the electric heating layer 2.

The electric heating layer 2 is formed by a continuous layer of heat conductive material. Between the above described electrical heating layer 2 and the insulation layer 3, or within the heating layer or between the corrosion resistance layer and heating layer, a positive wire 4 and a negative wire 5 are laid. The positive and negative lead wires are positioned along the tube diametrically in opposite positions to each other and extending along the length of the tube.

The above mentioned positive lead wire 4 and the negative lead wire 5 are nevertheless in close contact via the electrical heating layer 2, which is electrical conductive. Thanks to its electrical conductivity, the heating layer 2 forms a parallel circuit between the positive lead wire 4 and the negative lead wire 5.

When applying some electric voltage between the above described positive lead wire 4 and the negative lead wire 5, a flowing electrical current is produced in the electric heating layer 2. Due to its physical characteristic, the electric heating layer 2 has a certain electrical resistance. Due to the electrical current flowing through the electric heating layer 2, heat will be generated and thus a heating of the tube is exerted, preventing herewith any liquid from freezing in the anti-freezing tube.

Since the electric heating layer 2 is formed by the heating material evently distributed in circumferential direction, it will heat the anti-freezing tube evenly.

Drawing 3 shows a second embodiment of the inventive the anti-freeze tube. Drawing 3 shows the perspective view of the anti-freezing tube without the insulated layer 3.

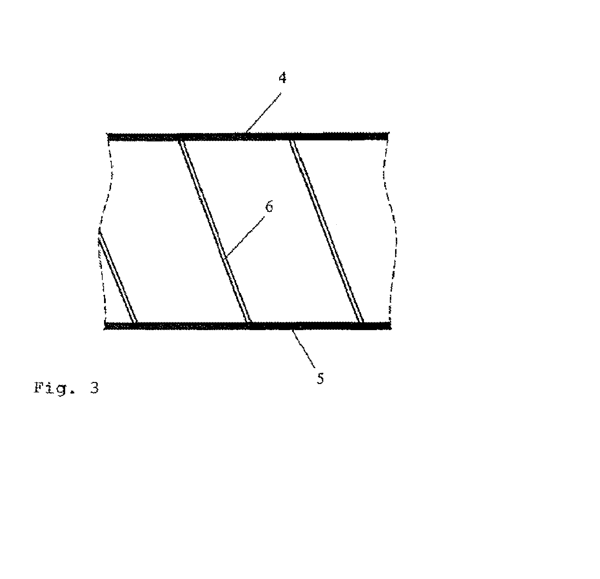

The difference between the embodiments is: the electric heating layer 2 of the first embodiment is replaced in this second embodiment by a resistance wire 6 which is winded on the resistance corrosion layer 1 (compare with figure 1). The other structural elements are the same as in the first embodiment. The second embodiment contains as well an insulating layer on the outer surface of the inventive tube (although not shown in figure 3).

In the second embodiment, the described positive lead wire 4 and negative lead wire 5 are in contact with the resistance wires 6 at many locations. The resistance wires have a relative electrical resistance. The resistance wires 6 form a shunt-wound resistance segment between the positive lead wire 4 and the negative lead wire 5.

When a given voltage between the positive lead wire 4 and negative lead wire 5 is applied, the resistance in the wires 6 between the positive lead wire 4 and the negative lead wire 5 causes a heating of the anti-freezing tube due to the flowing electric current and preventing herewith the liquid from freezing in the inventive anti-freezing tube.

According to this second embodiment, the electric heating layer 2 heats the anti-freezing tube by foreseeing an appropriate amount of resistance wires, reducing in that way the cost of a anti-freezing tube.

General technical personnel in this field can understand, according to the total resistance of parallel connection resistance calculation principle, the longer the anti-freezing tubes or the smaller the total resistance between wires 4 and wires 5, the greater the total heating power. The person skilled in the art can calculate the needed resistance of the wires basing on the actual length of the anti-freezing tube according to the actual needs in order to obtain the desired heating effect.

The invention is not limited in the above described embodiments and the person skilled in the art can make any modifications and variations according to the disclosed embodiments without deviating from the inventive concept.

## Claims

1. An antifreezing tube for the transportation of liquids, including in the most inside a corrosion-resistant layer (1), in the most outside an insulating protective layer (3), and a heating layer (2) between the corrosion resistant layer (1) and the insulation layer (3), **characterized in that**
a positive lead wire (4) and a negative lead wire (5) are arranged
- between the electric heating layer (2) and the insulation layer (3)
- or within the electric heating layer (2),
- or between the corrosion resistance layer (1) and the heating layer (2), in which the heating layer (2) constitutes an conductive electrical layer and in which the positive lead wire (4) and the negative lead wire (5) are in contact with the conductive electrical layer,
and whereas the positive lead wire (4) and the negative lead wire (5) extend along the length of the antifreezing tube.

2. Antifreezing tube according to claim 1, **characterized in that** the positive lead wire (4) and the negative lead wire (5) are both in electrical contact with the electrical heating layer (2),
whereby the electrical heating layer (2) is electrical conductive,
the electric heating layer (2) forms a closed circuit with the positive lead wire (4) and the negative lead wire (5) in order to allow an electrical current to flow between the positive wire (4) and the negative wire (5) through the electrical heating layer (2) and heating herewith the anti-freeze tube.

3. Antifreezing tube according to claim 1 or 2, **characterized in that** the positive lead wire (4) and the negative lead wire (5) are both arranged the tube diametrically away from of each other.

4. Antifreezing tube according to one of the foregoing claims, **characterized in that** said heating layer (2) is formed by a continuous conductive material.

5. Antifreezing tube according to one of the foregoing claims, **characterized in that** said heating layer (2) is formed by resistance wires (6) which are wound on the corrosion resistance layer.

6. Use of an antifreezing tube according to one of the foregoing claims for the transport of urea solution, preferably for diesel combustion engines.
